(19) Europäisches Patentamt
European Patent Office
Office européen des brevets

(11) **EP 2 547 510 B1**

(12) **EUROPÄISCHE PATENTSCHRIFT**

(45) Veröffentlichungstag und Bekanntmachung des Hinweises auf die Patenterteilung:
**26.03.2014   Patentblatt 2014/13**

(21) Anmeldenummer: **11707424.5**

(22) Anmeldetag: **11.03.2011**

(51) Int Cl.:
*B29C 70/18* (2006.01)     *B29C 70/50* (2006.01)
*B29C 70/20* (2006.01)     *B29B 11/16* (2006.01)
*B23B 7/10* (2006.01)      *B29B 15/12* (2006.01)
*B32B 5/12* (2006.01)      *B32B 5/26* (2006.01)
*D01F 6/66* (2006.01)      *D04B 21/14* (2006.01)
*D04B 21/16* (2006.01)     *D04H 3/045* (2012.01)
*D04H 3/147* (2012.01)     *D04H 3/153* (2012.01)
*B29B 15/10* (2006.01)     *B29K 63/00* (2006.01)
*B29K 77/00* (2006.01)     *B29K 105/08* (2006.01)
*B29K 101/12* (2006.01)    *C08J 5/24* (2006.01)

(86) Internationale Anmeldenummer:
**PCT/EP2011/053658**

(87) Internationale Veröffentlichungsnummer:
**WO 2011/113752 (22.09.2011 Gazette 2011/38)**

(54) **POLYMERVLIESE AUFWEISENDE MULTIAXIALGELEGE UND PREFORM ZUR HERSTELLUNG VON VERBUNDBAUTEILEN**

MULTIAXIAL LAID SCRIM HAVING A POLYMER NONWOVEN AND PREFORM FOR PRODUCING COMPOSITE COMPONENTS

TISSUS MULTIAXIAUX PRÉSENTANT DES NON-TISSÉS POLYMÈRES ET PRÉFORME POUR LA FABRICATION DES ÉLÉMENTS COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2010   EP 10002870**

(43) Veröffentlichungstag der Anmeldung:
**23.01.2013   Patentblatt 2013/04**

(73) Patentinhaber: **Toho Tenax Europe GmbH**
**42103 Wuppertal (DE)**

(72) Erfinder: **WOCKATZ, Ronny**
**42103 Wuppertal (DE)**

(74) Vertreter: **Schröder, Richard**
**CPW GmbH**
**Kasinostrasse 19-21**
**42103 Wuppertal (DE)**

(56) Entgegenhaltungen:
EP-A1- 1 705 269          EP-A2- 0 310 200
WO-A1-02/16481            FR-A1- 2 594 858
US-A1- 2004 053 028       US-A1- 2005 164 578
US-A1- 2006 252 334       US-A1- 2007 196 619

**Beschreibung**

Die Erfindung betrifft ein Gelege aus mindestens zwei übereinander angeordneten Lagen aus Multifilamentverstärkungsgarnen, wobei das Gelege auf und/oder zwischen den Lagen aus Multifilamentverstärkungsgarnen mindestens eine Lage aus einem Vlies aus thermoplastischem Polymermaterial aufweist.

Ausser dem betrifft die Erfindung eine Preform zur Herstellung von Verbundwerkstoff bauteilen.

Gelege aus Verstärkungsfasern oder -garnen sind seit langem auf dem Markt bekannt. Dabei werden vielfach Multiaxialgelege eingesetzt, die einen Aufbau aus mehreren übereinander angeordneten Fadenlagen aufweisen, wobei die Fadenlagen aus Scharen von zueinander parallel angeordneten Verstärkungsfäden bestehen. Die Fadenlagen sind so übereinander gelegt, dass die Verstärkungsfasern der Lagen zueinander parallel oder wechselweise kreuzend ausgerichtet sind. Die Winkel sind nahezu beliebig einstellbar. Üblicherweise werden bei Multiaxialgelegen aber Winkel von 0°, 90°, plus oder minus 25°, plus oder minus 30°, plus oder minus 45° oder plus oder minus 60° eingestellt und der Aufbau so gewählt, dass sich gegenüber der Null-Grad Richtung ein symmetrischer Aufbau ergibt.

Gelege wie die genannten Multiaxialgelege lassen sich aufgrund ihres Aufbaus speziell für die Fertigung von komplexen Strukturen einsetzten. Dabei werden die Gelege ohne Matrixmaterial in eine Form gelegt und an deren Kontur angepasst. Dadurch wird eine so genannte Preform erhalten, in die anschließend das zur Herstellung des Verbundbauteils erforderliche Matrixmaterial über Infusion oder Injektion, auch unter Anwendung von Vakuum eingebracht wird. Bekannte Verfahren sind hier das sogenannte Liquid Molding (LM-Verfahren) oder damit verwandte Verfahren wie z.B. Resin Transfer Molding (RTM), Vakuum Assisted Resin Transfer Molding (VARTM), Resin Film Infusion (RFI), Liquid Resin Infusion (LRI) oder Resin Infusion Flexible Tooling (RIFT).

Mit derartigen Gelegen aus Verstärkungsfasern hergestellte Faserverbund-Bauteile sind in hervorragender Weise geeignet, aus den Beanspruchungsrichtungen des Bauteils eingeleiteten Kräften direkt entgegenzuwirken und somit für hohe Festigkeiten zu sorgen. Dabei ermöglicht die Anpassung in den Multiaxialgelegen hinsichtlich der Faserdichten und Faserwinkel an die im Bauteil vorliegenden Belastungsrichtungen geringe spezifische Gewichte.

Die übereinander angeordneten Fadenlagen können über eine Vielzahl nebeneinander angeordneter und parallel zueinander verlaufender Maschen ausbildender Näh- oder Wirkfäden miteinander verbunden und gegeneinander fixiert werden, so dass das multiaxiale Gelege auf diese Weise stabilisiert wird. Die Näh- oder Wirkfäden bilden dabei die Null-Grad Richtung des Multiaxialgeleges aus. Solche multiaxialen Gelege lassen sich z.B. mittels üblicher Kettenwirkmaschinen oder Näh-Wirk-Maschinen herstellen, beispielsweise mittels der dem Fachmann bekannten LIBA-Maschinen oder Karl Mayer Maschinen. Mittels Näh- oder Wirkfäden verbundene multiaxiale Gelege und deren Herstellung werden beispielsweise in der DE 102 52 671 C1, der DE 199 13 647 B4, der WO 98/10128 oder der EP 0 361 796 A1 beschrieben.

Die EP 1 352 118 A1 offenbart multiaxiale Gelege, bei denen die Lagen der Verstärkungsfasern mittels schmelzbarer Nähgarne zusammengehalten werden, die eine gute Verformbarkeit der multiaxialen Gelege oberhalb der Schmelztemperatur der Nähfäden und bei anschließender Abkühlung eine Stabilisierung der Form ermöglichen. Häufig werden Nähfäden aus thermoplastischen Polymeren wie z.B. Polyamid oder Polyester eingesetzt, wie beispielsweise in der EP 1 057 605 offenbart.

In der US 2005/0164578 wird ein Vorprodukt für einen Verbundwerkstoff-Vorformling (Preform) beschrieben, das mindestens eine Lage aus einem Verstärkungsfasergewebe aufweist und bei dem in mindestens einer der Lagen Fasern zur Stabilisierung integriert sind, die die Preform stabilisieren, wenn diese erhöhten Temperaturen ausgesetzt werden und die sich im späteren in dem zur Herstellung des Verbundbauteils eingesetzten Matrixharz lösen. Auch die WO 02/16481 offenbart Strukturen aus Verstärkungsfasern z.B. für Preformen, wobei die Strukturen flexible Polymerelemente enthalten, die z.B. in Gestalt von Fasern zwischen die Verstärkungsfasern eingebracht sind oder als Nähfäden die Verstärkungsfasern miteinander verbinden. Die flexiblen Polymerelemente bestehen aus einem Material, welches in dem eingesetzen härtbaren Matrixmaterial löslich ist.

Gemäß der DE 198 09 264 A1 können zwischen die miteinander vernähten Lagen aus Verstärkungsfasern der dort offenbarten Fasergelegeanordnungen Klebevliese aus thermoplastischen Polymeren eingelegt werden. Durch diese Schmelzklebevliese lassen sich bei Erwärmung über die Schmelztemperatur des diese Vliese aufbauenden Polymers die Fasergelegeanordnungen auf einfache Weise in dreidimensionale Strukturen verformen, die nach Abkühlung praktisch ohne Rückstellkräfte ihre Form behalten.

Teilweise werden auch Wirrfasermatten oder -vliese oder Stapelfasergelege oder-matten zwischen die Fadenlagen aus Verstärkungsfasern gelegt, um z. B. die Durchtränkbarkeit der Gelege zu verbessern oder um z.B. die Schlagzähigkeit zu verbessern. Derartige mattenförmige Zwischenlagen aufweisende multiaxiale Gelege werden beispielsweise in der DE 35 35 272 C2 oder der US 2007/0202762 beschrieben, wobei für die Vliese bzw. Matten in der DE 35 35 272 C2, Flächengewichte zwischen 100 und 1200 g/m$^2$ und in der US 2007/0202762 Flächengewichte von 40 g/m$^2$ und 161 g/m$^2$ offenbart werden.

Die EP 1 473 132 hat Multiaxialgelege bzw. ein Verfahren zur Herstellung dieser Multiaxialgelege sowie aus den Multiaxialgelegen hergestellte Preformen zum Gegenstand. Die dortigen Multiaxialgelege weisen zwischen den Lagen aus unidirektional verlegten Verstärkungsfasern Zwischenlagen aus thermoplastischen Fasern auf, wobei die Zwischenlagen Vliese aus Bikomponentenfasern oder Hybridvliese aus miteinander vermischten unterschiedlichen Fasern sein können. Das die Zwischenlagen aufbauende Polymer soll kompatibel mit dem im späteren in die Preform injizierten Matrixharz sein. Insbesondere wird ausgeführt, dass die Zwischenlagen permeabel für das Matrixharz bei der Harzinfusion sein sollen und die Verstärkungslagen während der Harzinfusion und danach fixieren sollen. Im Falle der Verwendung von Epoxidharzen sind die Vliese aus Polyamidfasern aufgebaut. Die Vliese können mit den Lagen aus Verstärkungsfasern über Wirkmaschen verbunden sein oder über Schmelzklebung.

Auch die EP 1 772 258 offenbart einen Laminataufbau für die Herstellung von faserverstärkten Kunststoffteilen. Diese Laminataufbauten weisen eine Vliesschicht mit Flächengewichten von 100 bis 500 g/m$^2$ als Kernlage und mindestens eine Decklage aus Verstärkungsfasern auf. Die Vliesschicht ist beispielsweise eine Fasermischung aus Trägerfasern und thermoplastischen Bindefasern und der Schmelzpunkt der Binderfasern ist geringer als derjenige der Trägerfasern. Unter Wärmebehandlung bei einer Temperatur oberhalb des Schmelzpunkts der Bindefasern und unterhalb des Schmelzpunkt der Trägerfasern wird gemäß der EP 1 772 258 eine thermische Verfestigung der Vliesschicht und damit eine höhere innere Festigkeit und Dimensionsstabilität der Vliesschicht erreicht. Gleichzeitig gewährleistet die Vliesschicht eine hohe Durchlässigkeit bei der Infiltration mit Matrixharz.

Die US 2008/0289743 A1 offenbart Multiaxialgelege aus alternierend angeordneten Lagen von Verstärkungsfasern und Vliesen aus thermoplastischen Fasern als Zwischenlagen, wobei die Zwischenlagen zwischen den Verstärkungslagen angeordnet und mit diesen über Wirkmaschen oder Schmelzklebung verbunden sind. In einer Ausführungsform können die Vliese aus zwei oder mehreren Materialien aufgebaut sein und somit Hybridvliese oder Bikomponenten-, Trikomponentenvliese usw. sein. Gemäß einer besonderen Ausführungsform kann es sich um ein Vlies aus Kern-Mantelfasern handeln mit einem Kern aus Polyamid und einem Mantel aus Polyurethan. Die Vliese dienen dazu, die unidirektional angeordneten Verstärkungsfasern zu fixieren und den Harzfluss während der Harzinfiltrierung zu gewährleisten. In einer bevorzugten Ausführungsform soll die Härtung bei Temperaturen unterhalb der Schmelztemperatur der thermoplastischen Fasern der Zwischenlage erfolgen.

Ein Nachteil der zuvor beschriebenen Gelegeaufbauten des Stands der Technik ist der relativ hohe Anteil an Material, der nicht aus Verstärkungsfasern besteht und der somit nicht zur Festigkeit des resultierenden Bauteils beiträgt. Das Matrixmaterial muss auf die Gesamtmenge an Verstärkungsfasern und Vlies bezogen werden, so dass, bezogen auf das Bauteilvolumen, ein geringerer Anteil an Verstärkungsfasern im Bauteil und damit auch geringere Festigkeiten resultieren.

Die EP 1 705 269 offenbart ein thermoplastisches Fasermaterial aus einem Polyhydroxyether, welches z.B. bei multiaxialen Gelegen aus Verstärkungsfasern z.B. als Non-Woven zwischen die Lagen aus Verstärkungsfasern eingelegt werden kann. Unter Wärmeeinfluss wird das Polyhydroxyether Material viskos und klebrig, so dass eine Fixierung der Verstärkungsfasern in einer definierten geometrischen Anordnung vor ihrer Einbettung in der Matrix erreicht werden kann. Das Polyhydroxyether-Fasermaterial löst sich dann später bei einer Temperatur oberhalb seiner Glasumwandlungstemperatur vollständig im Matrixmaterial auf.

In der US 2006/0252334 werden Gelege aus mehreren Lagen von Verstärkungsfasern beschrieben, die zur Verbesserung der Schlagzähigkeit der aus diesen Gelegen hergestellten Bauteile zwischen den Verstärkungslagen z.B. Vliese aus polymeren Fasern enthalten. Dabei sollen diese polymeren Fasern im Matrixharz löslich sein, wodurch nach den Ausführungen der US 2006/0252334 eine gleichmäßigere Verteilung des diese Fasern aufbauenden Polymers in die Harzmatrix ermöglicht wird im Vergleich zu schmelzbaren, unlöslichen Thermoplasten.

Da die polymeren Fasern bei den Gelegen der US 2006/0252334 und der EP 1 705 269 im Matrixmaterial löslich sind und sich demzufolge während der Infiltration der Gelege mit Matrixharz auflösen, ist eine sichere Fixierung der Verstärkungslagen in diesem Stadium der Bauteilherstellung nicht hinreichend gewährleistet.

Es besteht daher ein Bedarf an Gelegen auf Basis von Verstärkungsfasern, die eine gute Drapierbarkeit und Formstabilität nach der Umformung zu Preformen sowie eine gute Durchlässigkeit bei der Infiltration von Matrixharzen aufweisen. Gleichzeitig sollen die aus diesen Gelegen hergestellten Bauteile hohe Festigkeitskennwerte insbesondere unter Druckbeaufschlagung und eine hohe Schlagzähigkeit besitzen.

Der vorliegenden Erfindung liegt daher die Aufgabe zu Grunde, derartige Gelege zur Verfügung zu stellen.

Die Aufgabe wird gelöst durch ein Gelege aus mindestens zwei übereinander angeordneten Lagen aus zueinander parallel nebeneinander angeordneten Multifilamentverstärkungsgarnen, wobei das Gelege auf und/oder zwischen den Lagen aus Multifilamentverstärkungsgarnen mindestens eine Lage aus einem Vlies aus thermoplastischem Polymermaterial aufweist und wobei das Vlies eine erste Polymerkomponente und eine zweite Polymerkomponente umfasst, deren Schmelztemperaturen unterhalb der Schmelz- oder Zersetzungstemperatur der Verstärkungsgarne liegen, dadurch gekennzeichnet, dass die erste Polymerkomponente eine niedrigere Schmelztemperatur aufweist als die zweite Polymerkomponente und dass die erste Polymerkomponente in Epoxid-, Cyanatester-, oder Benzoxazin-Matrixharzen oder in Mischungen dieser Matrixharze löslich ist und die zweite Polymerkomponente in Epoxid-, Cyanatester-, oder Benzoxazin-Matrixharzen oder in Mischungen dieser Matrixharze nicht löslich ist.

Vorzugsweise weist die erste Polymerkomponente eine Schmelztemperatur im Bereich zwischen 80 und 135°C und die zweite Polymerkomponente eine Schmelztemperatur im Bereich zwischen 140 und 250°C auf.

Aufgrund seines spezifischen Aufbaus zeichnet sich das erfindungsgemäße Gelege durch eine gute Drapierbarkeit und Fixierbarkeit der Gelegelagen in der Preform aus, durch eine gute Durchlässigkeit bei der Infiltrierung mit Matrixharz sowie dadurch, dass mit ihnen Bauteile mit hohen mechanischen Festigkeiten und mit hoher Schlagzähigkeit herstellbar sind. Durch die mindestens eine Vlieslage aus der erfindungsgemäßen Polymerkombination kann unter Erwärmung auf die Schmelztemperatur der ersten Polymerkomponente eine Beweglichkeit der Gelegelagen gegeneinander erreicht werden. Die geschmolzene erste Komponente des Vlieses wirkt gewissermaßen als Gleitmittel, so dass die Lagen der Verstärkungsgarne beim Umformprozess in die Preform in die gewünschte Lage gleiten können. Bei Abkühlung der Preform wirkt dann die erste Polymerkomponente als Schmelzkleber und fixiert die Verstärkungslagen in ihrer Position.

Bei der nachfolgenden Infiltrierung des Gelegeaufbaus mit Matrixharz, die in der Regel bei Temperaturen oberhalb der Schmelztemperatur der ersten, jedoch unterhalb der Schmelztemperatur der zweiten Komponente erfolgt, ist durch die höherschmelzende zweite Polymerkomponente des erfindungsgemäßen mindestens einen Vlieses eine gute Durchlässigkeit für das Matrixharz gewährleistet. Die erste Polymerkomponente hingegen löst sich im Matrixharz auf und verliert auf diese Weise seine Identität als eigenständige Phase gegenüber dem Matrixharz. Daher ist der Anteil der ersten Polymerkomponente somit dem Matrixmaterial zuzurechnen und der zu infiltrierende Anteil an Matrixharz kann um den Anteil der ersten Polymerkomponente reduziert werden. Infolgedessen können hohe Faservolumenanteile der Verstärkungsfasern im resultierenden Bauteil eingestellt und damit das Niveau der mechanischen Festigkeitskennwerte auf hohem Niveau gehalten werden.

Das im erfindungsgemäßen Gelege eingesetzte Vlies kann dabei aus einer Mischung von Monokomponentenfasern mit unterschiedlichen Schmelztemperaturen bestehen, also ein Hybridvlies sein. Das Vlies kann jedoch auch aus Bikomponentenfasern bestehen, beispielsweise aus Kern-Mantel Fasern, wobei der Kern der Faser aus einem höher schmelzenden Polymer und der Mantel aus einem niedriger schmelzenden Polymer aufgebaut ist. Ähnlich einem Vlies aus Bikomponentenfasern kann das Vlies auch z.B. aus einer Wirrlage von Fasern aus der zweiten Polymerkomponente aufgebaut sein, wobei die erste Polymerkomponente z.B. durch Besprühen oder durch Beschichten auf die Fasern der zweiten Polymerkomponente aufgetragen wurde. Die Beschichtung kann beispielsweise über eine Imprägnierung mit einer Dispersion oder Lösung der ersten Polymerkomponente erfolgen, wobei nach der Imprägnierung der Flüssigkeitsanteil der Dispersion bzw. das Lösemittel entfernt wurde. Ebenso ist es möglich, dass ein aus Fasern der zweiten Polymerkomponente aufgebautes Vlies die erste Polymerkomponente in Gestalt feiner, zwischen die Fasern der zweiten Polymerkomponente eingelagerter Partikel enthält. Vorzugsweise ist das Vlies ein Hybridvlies. Dabei hat es sich als vorteilhaft herausgestellt, wenn das Vlies die erste Polymerkomponente in einem Anteil von 2 bis 40 Gew.-% und die zweite Polymerkomponente in einem Anteil von 60 bis 98 Gew.-% enthält. Besonders bevorzugt liegt der Anteil der ersten Polymerkomponente im Bereich von 5 bis 35 Gew.-% und der Anteil der zweiten Polymerkomponente im Bereich von 65 bis 95 Gew.-%. In einer weiteren bevorzugten Ausführungsform enthält das Vlies die erste Polymerkomponente in einem Anteil von 20 bis 40 Gew.-% und die zweite Polymerkomponente in einem Anteil von 60 bis 80 Gew.-%.

Bei der Aushärtetemperatur des Matrixharzes, d.h. des Epoxid-, Cyanatester-, oder Benzoxazinharzes, reagiert in einer bevorzugten Ausführungsform die erste Polymerkomponente chemisch mit dem aushärtenden Matrixharz über Vernetzungsreaktionen und wird so integraler Teil einer homogenen Matrix. Daher ist die erste Polymerkomponente vorzugsweise ein mit Epoxid-, Cyanatester-, oder Benzoxazin-Matrixharzen über chemische Vernetzungsreaktionen reagierendes Polymer. Besonders bevorzugt ist die erste Polymerkomponente ein Polyhydroxyether. Derartige Polyhydroxyether werden z.B. in der EP 1 705 269 beschrieben, auf deren diesbezügliche Offenbarung sich ausdrücklich bezogen wird.

Erfindungsgemäß weist die zweite Polymerkomponente eine höhere Schmelztemperatur als die erste Polymerkomponente auf. Bevorzugt schmilzt die zweite Polymerkomponente bei der Härtungstemperatur des eingesetzten Matrixharzes oder bei Temperaturen im Bereich zwischen der Schmelztemperatur der ersten Polymerkomponente und der Härtungstemperatur des Matrixharzes. Auf diese Weise wird die zweite Polymerkomponente ebenfalls in das Matrixmaterial eingebunden, bildet jedoch im Unterschied zur ersten Polymerkomponente im ausgehärteten Matrixharz eine eigene Phase aus. Diese durch die zweite Polymerkomponente ausgebildete Phase hilft bei der Aushärtung und im späteren Bauteil, eine Ausbreitung von Rissen zu begrenzen und trägt so z.B. zur Erhöhung der Schlagzähigkeit entscheidend bei.

Als zweite Polymerkomponente des im erfindungsgemäßen Gelege eingesetzten Vlieses können übliche zu thermoplastischen Fäden verarbeitbare Polymere eingesetzt werden, solange sie die anspruchsgemäßen Bedingungen erfüllen, wie z.B. Polyamide, Polyimide, Polyamidimide, Polyester, Polybutadiene, Polyurethane, Polypropylene, Polyetherimide, Polysulfone, Polyethersulfone, Polyphenylensulfone, Polyphenylensulfide, Polyetherketone, Polyetheretherketone, Polyarylamide, Polyketone, Polyphtalamide, Polyphenylenether, Polybutylentherephtalate oder Polyethylentherephthalate oder Copolymere oder Mischungen diese Polymere.

Im Hinblick auf die zuvor genannten Matrixharze ist bevorzugt, wenn die zweite Polymerkomponente ein Polyamidhomopolymer oder Polyamidcopolymer oder eine Mischung aus Polyamidhomopolymeren und/oder Polyamidcopolymeren ist. Besonders bevorzugt ist das Polyamid-Homopolymer oder -Copolymer ein Polyamid 6, Polyamid 6.6, Polyamid 6.12, Polyamid 4.6, Polyamid 11, Polyamid 12 oder ein Copolymer auf Basis Polyamid 6/12.

Im Hinblick auf eine Vergleichmäßigung der Materialeigenschaften über der Gelegedicke ist es vorteilhaft, wenn bei dem erfindungsgemäßen Gelege zwischen jeder Lage von Multifilamentverstärkungsgarnen eine Vlieslage angeordnet ist. Im Hinblick auf die Eigenschaften des mit dem erfindungemäßen Gelege hergestellten Bauteils und im Hinblick auf ein möglichst hohes Kennwertniveau der mechanischen Eigenschaften ist es ebenso bevorzugt, wenn das Vlies ein Flächengewicht im Bereich von 5 und 25 g/m$^2$ aufweist. Besonders bevorzugt liegt das Flächengewicht im Bereich von 6 und 20 g/m$^2$.

Im erfindungsgemäßen Gelege können als Verstärkungsfasern die üblichen zur Herstellung von faserverstärkten Verbundwerkstoffen verwendeten Verstärkungsfasern bzw. -garne eingesetzt werden. Vorzugsweise handelt des sich bei den Multifilamentverstärkungsgarnen um Kohlenstofffaser-, Glasfaser -, oder Aramidgarne oder um hochverstreckte UHMW-Polyethylengarne und besonders bevorzugt um Kohlenstofffasergarne.

Im Hinblick auf ein hohes Niveau der mechanischen Eigenschaften im resultierenden Bauteil ist es von Vorteil, wenn die Verstärkungsgarne innerhalb einer Lage aus Multifilamentverstärkungsgarnen zueinander parallel und aneinander anliegend nebeneinander angeordnet sind. Hierdurch können hohe Faservolumenanteile erzielt werden und im Bauteil Zonen mit geringem Faseranteil vermieden werden.

In einer weiteren bevorzugten Ausführungsform bilden die Verstärkungsgarne übereinander angeordneter Lagen in Blickrichtung senkrecht zur Lagenebene einen Winkel miteinander aus. Damit ist es möglich, eine Anpassung der Ausrichtung der Verstärkungsgarne in Bezug auf die Beanspruchungsrichtungen im späteren Bauteil vorzunehmen und für die erforderlichen Festigkeiten in diesen Beanspruchungsrichtungen zu sorgen. Dabei ist es vorteilhaft, wenn die Lagen von Verstärkungsgarnen so alternierend unter definierten Winkeln gegenüber einer Null-Grad Richtung angeordnet, dass sich ein symmetrischer oder ein quasiisotroper Aufbau ergibt. So kann das erfindungsgemäße Gelege beispielsweise einen Aufbau mit einer +45°, einer -45°, einer +45° und einer -45° Lage aufweisen, d.h. bei dem die innerhalb der einzelnen Lagen unidirektional angeordneten Verstärkungsgarne einen Winkel von +45°, -45°, +45° und - 45° zur Null-Grad Richtung aufweisen. Üblicherweise sind bei derartigen Multiaxialgelegen Winkel α im Bereich von ± 20° bis ca. ± 80° zu finden. Typische Winkel α sind ± 25°, ± 30°, ± 45° und ± 60°.

Um z.B. auch weitere Beanspruchungsrichtungen im späteren Bauteil Rechnung zu tragen, umfasst das erfindungsgemäße Gelege vorzugsweise auch Lagen von Multifilamentverstärkungsgarnen, bei denen die Verstärkungsgarne gegenüber der Null-Grad Richtung einen Winkel von 0° und/oder Lagen, bei denen die Verstärkungsgarne gegenüber der Null-Grad Richtung einen Winkel von 90 ° ausbilden. Diese 0° bzw. 90° Lagen befinden sich vorzugsweise zwischen den unter dem Winkel α orientierten Lagen. Es ist jedoch auch beispielsweise ein Aufbau mit folgenden Richtungen möglich: 90°, +30°, -30°, 0° -30°, +30°, 90°, d.h. ein Aufbau, bei dem die äußeren Lagen aus 90° Lagen gebildet sind.

Bei dem erfindungsgemäßen Gelege können die Lagen von Multifilamentverstärkungsgarnen aus vorgefertigten Unidirektionalgeweben der Multifilamentverstärkungsgarne bestehen. Bei diesen Unidirektionalgeweben werden die die jeweilige Lage aufbauenden, parallel zueinander angeordneten Verstärkungsgarne durch Ketten aus lockeren Bindefäden, die sich im wesentlichen quer zu den Verstärkungsgarnen erstrecken, miteinander verbunden. Derartige Unidirektionalgewebe werden beispielsweise in der EP 0 193 479 B1 oder der EP 0 672 776 beschrieben, auf deren diesbezügliche Offenbarung hier ausdrücklich Bezug genommen wird.

Um bei den erfindungsgemäßen Gelegen insbesondere bei der Harzinjektion eine höhere Stabilität zu erhalten und z.B. ein ungewünschtes Verschieben der Verstärkungslagen zu vermeiden, sind in einer bevorzugten Ausgestaltung der Erfindung die Lagen aus Multifilamentverstärkungsgarnen und die mindestens eine Vlieslage miteinander durch zueinander parallel verlaufende und zueinander mit einer Stichweite beabstandete und Maschen ausbildende Nähfäden oder Näh-Wirkfäden miteinander verbunden und gegeneinander fixiert. Dabei definieren die Nähfäden die Null-Grad Richtung des Geleges.

Die einzelnen aus Multifilamentverstärkungsgarnen aufgebauten Lagen der erfindungsgemäßen Gelege können dabei mittels üblicher Methoden und Apparate hergestellt und übereinander in definierten Winkeln gegenüber der Null-Grad Richtung abgelegt werden. Wie bereits ausgeführt, sind bekannte Maschinen auf diesem Gebiet die LIBA-Maschinen oder die Karl Mayer Maschinen. Damit lassen sich auch die Verstärkungsgarne so zueinander innerhalb der Lagen positionieren, dass sie aneinander liegen, d.h. im Wesentlichen ohne Spalten, nebeneinander liegen.

Als Nähfäden kommen die üblicherweise zur Herstellung von Garngelegen eingesetzten Garne in Betracht. Dabei werden im Rahmen der vorliegenden Erfindung als Nähfäden auch solche Fäden verstanden, die nicht über Nähen in das erfindungsgemäße Multiaxialgelege eingebracht sind, sondern über andere maschenbildende textile Prozesse wie insbesondere über Wirkprozesse. Die Maschen, über die die Nähfäden die Lagen des multiaxialen Geleges miteinander verbinden, können die bei Multiaxialgelegen üblichen Bindungstypen aufweisen wie z.B. Trikotbindung oder Fransenbindung. Bevorzugt ist eine Fransenbindung.

Vorzugsweise sind die Nähfäden Multifilamentgarne. Dabei können solche Nähgarne eingesetzt werden, die bei der späteren Harzinjektion z.B. oberhalb der Harzinjektionstemperatur, jedoch unterhalb der Aushärtetemperatur des eingesetzten Harzes schmelzen. Die Garne können auch bei der Härtetemperatur selbst aufschmelzbar sein. Die Nähgarne können auch solche sein, die im Matrixharz z.B. während der Injektion oder auch während dessen Aushärtung auflösbar sind. Derartige Nähfäden werden z.B. in der DE 199 25 588, der EP 1 057 605 oder der US 6 890 476 beschrieben, auf deren diesbezügliche Offenbarung ausdrücklich Bezug genommen wird. Bevorzugt bestehen die Nähfäden aus Polyamid, Polyaramid, Polyester, Polyacryl, Polyhydroxyether oder aus Copolymeren dieser Polymere. Besonders bevorzugt sind die Nähfäden Multifilamentgarne aus Polyester, Polyamid oder Polyhydroxyether oder aus Copolymeren dieser Polymere.

Es ist von Vorteil, wenn die Nähfäden bei Raumtemperatur eine Bruchdehnung von $\geq 50$ % aufweisen. Durch die hohe Bruchdehnung lässt sich eine verbesserte Drapierfähigkeit der erfindungsgemäßen Multiaxialgelege erreichen, wodurch auch komplexere Strukturen bzw. Bauteile realisiert werden können.

In einer besonderen Ausführungsform vernähter oder verwirkter erfindungsgemäßer Gelege weisen die Nähfäden einen Titer im Bereich von 10 bis 35 dtex auf. Es hat sich nämlich gezeigt, dass insbesondere die Stabilität gegenüber Druckbeanspruchungen deutlich verbessert wird, wenn der Titer der Nähfäden im Gelege in dem genannten Bereich liegt. Dies wird darauf zurückgeführt, dass bei Verwendung solcher Nähfäden das Fadenbild der einzelnen Fadenlagen gegenüber bekannten Multiaxialgelegen deutlich vergleichmäßigt ist. Insbesondere ist festzustellen, dass die Filamente der Verstärkungsgarne einen geradlinigeren Verlauf zeigen als dies bei Gelegen des Stands der Technik der Fall ist. Besonders bevorzugt haben die Nähfäden einen Titer im Bereich von 10 bis 30 dtex und besonders bevorzugt einen Titer im Bereich von 15 bis 25 dtex.

Wie ausgeführt, bilden die Nähfäden Maschen aus und definieren die Null-Grad Richtung des Geleges. Im Fall, dass die Verstärkungsgarne der Lagen in Bezug auf die Null-Grad Richtung des Geleges symmetrisch angeordnet sind und, bezogen auf ihre Erstreckungsrichtung, einen Winkel $\alpha$ zur Null-Grad-Richtung ausbilden, der ungleich 90° und ungleich 0° ist, wurde im Hinblick auf die Festigkeit gegenüber Druckbeanspruchungen und/oder Schlagbeanspruchungen vom mittels der erfindungsgemäßen Multiaxialgelege hergestellten Verbundwerkstoffbauteile überraschenderweise des Weiteren festgestellt, dass ein besonders gutes Festigkeitsniveau erreicht wird, wenn die Stichlänge s der durch die Nähfäden ausgebildeten Maschen in Abhängigkeit von der Stichweite w sowie vom Winkel $\alpha_1$ der Verstärkungsgarne im erfindungsgemäßen multiaxialen Gelege den folgenden Beziehungen (I) und (II) genügt:

$$2 \text{ mm} \leq s \leq 4 \text{ mm} \qquad\qquad\qquad (I)$$

und

$$s = n \cdot B \cdot \frac{w \cdot |\tan \alpha_1|}{2,3}, \qquad\qquad\qquad (II)$$

Dabei kann der Multiplikator B Werte im Bereich $0,9 \leq B \leq 1,1$ und n die Werte 0,5 1, 1,5, 2, 3 oder 4 annehmen kann, womit auch für kleine Werte von $w \cdot |\tan \alpha_1|/2,3$ die Stichweite s in dem gemäß Gleichung (I) geforderten Bereich liegt. Die Stichweite w, d.h. der Abstand zwischen den Nähfäden ist dabei in mm anzugeben.

Unter dem Winkel $\alpha_1$ wird dabei der Winkel zur Null-Grad-Richtung verstanden, unter dem die Verstärkungsgarne der bei Draufsicht auf das Multiaxialgelege ersten Lage angeordnet sind, deren Verstärkungsgarne zur Null-Grad-Richtung einen von 90° und 0° verschiedenen Winkel aufweisen. Im Falle, dass die Verstärkungsgarne der obersten Lage oder obersten Lagen des Multiaxialgeleges einen Winkel von 90° oder von 0° zur Null-Grad-Richtung aufweisen, ist dann die erste unter dieser Lage bzw. unter diesen Lagen angeordnete Lage in Betracht zu ziehen, deren Verstärkungsgarne einen von 90° oder 0° abweichenden Winkel aufweisen.

Es wurde bei Untersuchung des Faserbildes, d.h. des Verlaufs der Fasern bzw. der Filamente der Multifilamentverstärkungsgarne in den Lagen des Geleges festgestellt, dass bei Einhaltung der Bedingungen (I) und (II) ein sehr gleichmäßiger Verlauf der Fasern resultiert mit einer deutlich reduzierten Welligkeit der Garne und einem deutlich verminderten Auftreten von Spalten zwischen Garnbündeln. Hierzu ist offenbar ausschlaggebend, dass entlang des Verlaufs eines Garnbündels oder Faserstrangs die Nähfäden den Faserstrang an möglichst unterschiedlichen Positionen über der Breite des Faserstrangs durchstechen. Bei den üblicherweise eingestellten Werten hinsichtlich Stichlänge und Stichweite außerhalb der durch die Bedingungen (I) und (II) definierten Bereiche ist zu beobachten, dass die Einstiche der Nähfäden entlang der Erstreckung der Verstärkungsgarne im wesentlichen zwischen denselben Fasern bzw. Filamenten bzw. denselben Bereichen des Faserstrangs bzw. des Verstärkungsgarns auftreten. Hierdurch kommt es zu ausgeprägter Welligkeit bzw. Ondulation im Garnverlauf und zur Ausbildung von Spalten zwischen Filamenten.

Insgesamt wurde festgestellt, dass bei Verwendung der erfindungsgemäßen niedrigtitrigen Nähfäden und bei Einhalten der obengenannten Bedingungen (I) und (II) in der Draufsicht auf die Lagen der Verstärkungsgarne die durch die Einstichstellen der Nähfäden im Gelege hervorgerufene Faserablenkung, auch als Ondulationswinkel bezeichnet, um bis zu ca. 25% reduziert werden kann. Gleichzeitig können die entstehende Ondulationsflächen, d.h. die Flächen bzw. die Bereiche, in dem die Filamente oder Fäden eine Ablenkung zeigen, um ca. 40 % verkleinert und die Freiräume zwischen Fasern, die zu Bereichen mit erhöhtem Harzanteil und verringerter Festigkeit im Bauteil insbesondere bei Druckbeanspruchung führen, damit deutlich verringert werden.

Gleichzeitig konnte anhand von Schliffbildern von Verbundlaminaten auf Basis der erfindungsgemäßen Multiaxialgelege festgestellt werden, dass durch die Verwendung der erfindungsgemäßen niedrigtitrigen Nähfäden überraschenderweise eine deutliche Vergleichmäßigung des Verlauf der Verstärkungsfäden in einer Betrachtungsrichtung senkrecht zu den Lagen der Verstärkungsgarne und parallel zu den Verstärkungsgarnen erzielt wurde. So wurde bei Verwendung eines Nähfadens mit einem Titer von 23 dtex ein im wesentlichen linearer Verlauf der Filamente der Verstärkungsgarne erhalten. Bei Verwendung eines Nähfadens mit einem Titer außerhalb des bevorzugten Bereichs zeigten bereits bei einem Titer von 48 dtex über den genannten Querschnitt des Verbundlaminats gesehen alle Filament einen sehr unruhigen, wellenförmigen Verlauf mit Schwankungsamplituden in der Größenordnung der Dicke einer Lage von Verstärkungsfäden.

Dabei kann die Stichlänge im Bereich von 2 mm und 4 mm liegen. Bei Stichlängen oberhalb von 4 mm ist eine hinreichende Stabilität des erfindungsgemäßen Geleges nicht mehr gewährleistet. Unterhalb von 2 mm hingegen kommt es zu einer zu hohen Anzahl von Fehlstellen im Gelege. Darüber hinaus nimmt auch die Wirtschaftlichkeit der Herstellung der Multiaxialgelege in starkem Maße ab.

Die erfindungsgemäßen Gelege zeichnen sich durch eine gute Drapierfähigkeit und durch eine gute Harzdurchlässigkeit aus. Darüber hinaus ermöglichen sie die Herstellung von Bauteilen mit hoher Stabilität gegenüber Druckbeanspruchungen und hoher Toleranz gegenüber Schlagbeanspruchungen. Sie sind daher in besonderer Weise zur Herstellung von sogenannten Preformen geeignet, aus denen komplexere Faserverbundbauteile hergestellt werden. Daher betrifft die vorliegende Erfindung insbesondere auch Preformen zur Herstellung von Faserverbundbauteilen, die die erfindungsgemäßen Gelege enthalten.

## Patentansprüche

1. Gelege aus mindestens zwei übereinander angeordneten Lagen aus zueinander parallel nebeneinander angeordneten Multifilamentverstärkungsgarnen, wobei das Gelege auf und/oder zwischen den Lagen aus Multifilamentverstärkungsgarnen mindestens eine Lage aus einem Vlies aus thermoplastischem Polymermaterial aufweist, wobei das Vlies eine erste Polymerkomponente und eine zweite Polymerkomponente umfasst, deren Schmelztemperaturen unterhalb der Schmelz- oder Zersetzungstemperatur der Verstärkungsgarne liegen, **dadurch gekennzeichnet, dass** die erste Polymerkomponente eine niedrigere Schmelztemperatur aufweist als die zweite Polymerkomponente und dass die erste Polymerkomponente in Epoxid-, Cyanatester-, oder Benzoxazin-Matrixharzen oder in Mischungen dieser Matrixharze löslich und die zweite Polymerkomponente in Epoxid-, Cyanatester-, oder Benzoxazin-Matrixharzen oder in Mischungen dieser Matrixharze nicht löslich ist.

2. Gelege nach Anspruch 1, **dadurch gekennzeichnet, dass** die erste Polymerkomponente eine Schmelztemperatur im Bereich zwischen 80 und 135°C und die zweite Polymerkomponente eine Schmelztemperatur im Bereich zwischen 140 und 250°C aufweist.

3. Gelege nach Anspruch 1 oder 2, **dadurch gekennzeichnet, dass** das Vlies ein Hybridvlies ist.

4. Gelege nach einem oder mehreren der Ansprüche 1 bis 3, **dadurch gekennzeichnet, dass** die zweite Polymerkomponente ein Polyamidhomopolymer oder Polyamidcopolymer oder eine Mischung aus Polyamidhomopolymeren und/oder Polyamidcopolymeren ist.

5. Gelege nach Anspruch 4, **dadurch gekennzeichnet, dass** das Polyamid-Homopolymer oder -Copolymer ein Polyamid 6, Polyamid 6.6, Polyamid 6.12, Polyamid 4.6, Polyamid 11, Polyamid 12 oder ein Copolymer auf Basis Polyamid 6/12.

6. Gelege nach einem oder mehreren der Ansprüche 1 bis 5, **dadurch gekennzeichnet, dass** die erste Polymerkomponente ein mit Epoxid-, Cyanatester-, oder Benzoxazin-Matrixharzen bei der Vernetzung dieser Matrixharze chemisch reagierendes Polymer ist.

7. Gelege nach Anspruch 6, **dadurch gekennzeichnet, dass** die erste Polymerkomponente ein Polyhydroxyether ist.

8. Gelege nach einem oder mehreren der Ansprüche 1 bis 7, **dadurch gekennzeichnet, dass** das Vlies die erste Polymerkomponente in einem Anteil von 2 bis 40 Gew.-% und die zweite Polymerkomponente in einem Anteil von 60 bis 98 Gew.-% enthält.

9. Gelege nach einem oder mehreren der Ansprüche 1 bis 8, **dadurch gekennzeichnet, dass** die mindestens eine Vlieslage ein Flächengewicht im Bereich von 5 und 25 g/m$^2$ aufweist.

10. Gelege nach einem oder mehreren der Ansprüche 1 bis 9, **dadurch gekennzeichnet, dass** zwischen jeder seiner Lagen von Multifilamentverstärkungsgarnen eine Vlieslage angeordnet ist.

11. Gelege nach einem oder mehreren der Ansprüche 1 bis 10, **dadurch gekennzeichnet, dass** die Multifilamentverstärkungsgarne Kohlenstofffaser-, Glasfaser- oder Aramidgarne oder hochverstreckte UHMW-Polyethylengarne sind.

12. Gelege nach einem oder mehreren der Ansprüche 1 bis 11, **dadurch gekennzeichnet, dass** die Verstärkungsgarne übereinander angeordneter Lagen in Blickrichtung senkrecht zur Lagenebene einen Winkel miteinander ausbilden.

13. Gelege nach einem oder mehreren der Ansprüche 1 bis 12, **dadurch gekennzeichnet, dass** die Lagen aus Multifilamentverstärkungsgarnen und das mindestens eine Vlieslage miteinander durch zueinander parallel verlaufende und zueinander beabstandete Nähfäden miteinander verbunden sind.

14. Gelege nach Anspruch 13, **dadurch gekennzeichnet, dass** die Verstärkungsgarne innerhalb einer Lage sowie benachbarter Lagen durch zueinander mit einer Stichweite w beabstandete Nähfäden miteinander verbunden und gegeneinander fixiert sind, wobei die Nähfäden Maschen mit einer Stichlänge s ausbilden und durch die Nähfäden die Null-Grad Richtung des Geleges definiert wird, wobei die Verstärkungsgarne der Lagen in Bezug auf die Null-Grad Richtung des Geleges symmetrisch angeordnet sind und, bezogen auf ihre Erstreckungsrichtung, einen Winkel $\alpha$ zur Null-Grad-Richtung ausbilden, der ungleich 90° und ungleich 0° ist, wobei die Nähfäden einen Titer im Bereich von 10 bis 35 dtex aufweisen und wobei die Stichlänge s der Nähfäden in Abhängigkeit von der Stichweite sowie vom Winkel $\alpha_1$ der Verstärkungsgarne den Beziehungen (I) und (II) genügt:

$$2 \text{ mm} \leq s \leq 4 \text{ mm} \qquad\qquad\qquad \text{(I)}$$

$$s = n \cdot B \cdot \frac{w \cdot |\tan \alpha_1|}{2,3}, \qquad\qquad\qquad \text{(II)}$$

mit
w = Stichweite [mm],
$0,9 \leq B \leq 1,1$ und
n = 0,5; 1; 1,5; 2; 3 oder 4,
und wobei unter dem Winkel $\alpha_1$ derjenige Winkel zur Null-Grad-Richtung verstanden wird, unter dem die Verstärkungsgarne der bei Draufsicht auf das Multiaxialgelege ersten Lage angeordnet sind, deren Verstärkungsgarne zur Null-Grad-Richtung einen von 90° und 0° verschiedenen Winkel aufweisen.

15. Preform zur Herstellung von Verbundwerkstoffbauteilen, **dadurch gekennzeichnet, dass** sie ein Gelege nach einem oder mehreren der Ansprüche 1 bis 14 umfasst.

**Claims**

1. A non-crimp fabric made from at least two superimposed layers made from multifilament reinforcement yarns arranged parallel to each other, wherein the non-crimp fabric has at least one layer made from a non-woven made from thermoplastic polymer material on and/or between the layers made from multifilament reinforcement yarns, and wherein the non-woven comprises a first polymer component and a second polymer component whose melting temperatures lie below the melting or decomposition temperature of the reinforcement yarns, **characterized in that** the first polymer component has a lower melting temperature than the second polymer component and that the first polymer component is soluble in epoxy matrix resins, cyanate ester matrix resins, or benzoxazine matrix resins, or in mixtures of these matrix resins, and the second polymer component is not soluble in epoxy matrix resins, cyanate ester matrix resins, or benzoxazine matrix resins, or in mixtures of these matrix resins.

2. A non-crimp fabric according to Claim 1, **characterized in that** the first polymer component has a melting temperature in the range between 80 and 135°C and the second polymer component has a melting temperature in the range between 140 and 250 °C.

3. A non-crimp fabric according to Claim 1 or 2, **characterized in that** the non-woven is a hybrid non-woven.

4. A non-crimp fabric according to one or more of Claims 1 to 3, **characterized in that** the second polymer component is a polyamide homopolymer or a polyamide copolymer or a mixture of polyamide homopolymers and/or polyamide copolymers.

5. A non-crimp fabric according to Claim 4, **characterized in that** the polyamide homopolymer or polyamide copolymer is a polyamide 6, polyamide 6,6, polyamide 6,12, polyamide 4,6, polyamide 11, polyamide 12, or a copolymer based on polyamide 6/12.

6. A non-crimp fabric according to one or more of Claims 1 to 5, **characterized in that** the first polymer component is a polymer that reacts chemically with epoxy matrix resins, cyanate ester matrix resins, or benzoxazine matrix resins when these matrix resins are crosslinked.

7. A non-crimp fabric according to Claim 6, **characterized in that** the first polymer component is a polyhydroxy ether.

8. A non-crimp fabric according to one or more of Claims 1 to 7, **characterized in that** the non-woven contains the first polymer component in a proportion from 2 to 40 wt.% and the second polymer component in a proportion from 60 to 98 wt.%.

9. A non-crimp fabric according to one or more of Claims 1 to 8, **characterized in that** the at least one non-woven layer has a mass per unit area in the range from 5 to 25 g/m$^2$.

10. A non-crimp fabric according to one or more of Claims 1 to 9, **characterized in that** a non-woven layer is arranged between each of the non-crimp fabric's layers of multifilament reinforcement yarns.

11. A non-crimp fabric according to one or more of Claims 1 to 10, **characterized in that** the multifilament reinforcement yarns are carbon fiber, glass fiber, or aramid yarns, or highly extended UHMW polyethylene yarns.

12. A non-crimp fabric according to one or more of Claims 1 to 11, **characterized in that** the reinforcement yarns of superimposed layers form an angle to each other when viewed perpendicular to the layer plane.

13. A non-crimp fabric according to one or more of Claims 1 to 12, **characterized in that** the layers made from multifilament reinforcement yarns and the at least one non-woven layer are connected to each other by sewing threads running parallel to each other and separated from each other.

14. A non-crimp fabric according to Claim 13, **characterized in that** the reinforcement yarns within one layer as well as adjacent layers are connected to each other and secured against each other by sewing threads separated from each other at a stitch width w, wherein the sewing threads form stitches with a stitch length s, and the zero-degree direction of the non-crimp fabric is defined by the sewing threads, wherein the reinforcement yarns of the layers are symmetrically arranged in respect to the zero-degree direction of the non-crimp fabric and, with respect to their direction of extension, form an angle α to the zero-degree direction, said angle not being equal to 90° or 0°, wherein the sewing threads have a linear density in the range from 10 to 35 dtex, and wherein the stitch length s of the sewing threads depends on the stitch width as well as on the angle $\alpha_1$ of the reinforcement yarns and satisfies the relations (I) and (II):

$$2 \text{ mm} \leq s \leq 4 \text{ mm} \qquad\qquad\qquad\qquad \text{(I)}$$

$$s = n \cdot B \cdot \frac{w \cdot |\tan \alpha_1|}{2.3} \, , \qquad\qquad\qquad \text{(II)}$$

where
w = stitch width [mm],
$0.9 \leq B \leq 1.1$ and
n = 0.5, 1, 1.5, 2, 3, or 4,
and wherein the angle $\alpha_1$ is understood as the angle to the zero-degree direction, when viewed from above, at which the reinforcement yarns of the first layer of the multiaxial non-crimp fabric are arranged whose reinforcement yarns have an angle differing from 90° and 0° to the zero-degree direction.

15. A preform for producing composite material components, **characterized in that** it comprises a non-crimp fabric according to one or more of Claims 1 to 14.


**Revendications**

1. Etoffe sans ondulations constituée d'au moins deux couches, disposées l'une au-dessus de l'autre, de filés de renfort multi-filamentaires disposés les uns à côté des autres et parallèlement les uns aux autres, laquelle étoffe sans ondulations comporte, sur et/ou entre les couches de filés de renfort multi-filamentaires, au moins une couche constituée d'un non-tissé en maté-riau polymère thermoplastique, lequel non-tissé comprend un premier composant polymère et un deuxième composant polymère dont les tem-pératures de fusion se situent au-dessous de la température de fusion ou de décomposition des filés de renfort, **caractérisée en ce que** la température de fusion du premier composant polymère est plus basse que celle du deuxième composant polymère et **en ce que** le premier composant polymère est soluble dans des résines matrices de type époxy, à base d'ester cyanate ou à base de benzoxazine ou dans des mélanges de telles résines matrices, alors que le deuxième composant polymère n'est pas soluble dans des résines matrices de type époxy, à base d'ester cyanate ou à base de benzoxazine ou dans des mélanges de telles résines matrices.

2. Etoffe sans ondulations conforme à la revendication 1, **caractérisée en ce que** la température de fusion du premier composant polymère se situe dans l'intervalle allant de 80 à 135 °C, alors que la température de fusion du deuxième composant polymère se situe dans l'intervalle allant de 140 à 250 °C.

3. Etoffe sans ondulations conforme à la revendication 1 ou 2, **caractérisée en ce que** le non-tissé est un non-tissé hybride.

4. Etoffe sans ondulations conforme à l'une ou plusieurs des revendications 1 à 3, **caractérisée en ce que** le deuxième composant polymère est un homopolymère polyamide ou un copolymère polyamide, ou un mélange constitué d'homopolymères polyamides et/ou de copolymères polyami-des.

5. Etoffe sans ondulations conforme à la revendication 4, **caractérisée en ce que** l'homopolymère ou copolymère polyamide est un polyamide 6, un po-lyamide 6.6, un polyamide 6.12, un polyamide 4.6, un polyamide 11, un polyamide 12 ou un copolymère à base de polyamide 6/12.

6. Etoffe sans ondulations conforme à l'une ou plusieurs des revendications 1 à 5, **caractérisée en ce que** le premier composant polymère est un po-lymère qui, lors de la réticulation de résines matrices de type époxy, à base d'ester cyanate ou à base de benzoxazine, réagit chimiquement avec ces résines matrices.

7. Etoffe sans ondulations conforme à la revendication 6, **caractérisée en ce que** le premier composant polymère est un poly(hydroxy-éther).

8. Etoffe sans ondulations conforme à l'une ou plusieurs des revendications 1 à 7, **caractérisée en ce que** le non-tissé contient de 2 à 40 % en poids du premier composant polymère et de 60 à 98 % en poids du deuxième composant polymère.

9. Etoffe sans ondulations conforme à l'une ou plusieurs des revendications 1 à 8, **caractérisée en ce que** la couche de non-tissé au nombre d'au moins une présente un poids surfacique qui vaut de 5 à 25 g/m$^2$.

10. Etoffe sans ondulations conforme à l'une ou plusieurs des revendications 1 à 9, **caractérisée en ce qu'**elle comporte une couche de non-tissé dans chaque intervalle entre ses couches de filés de renfort multi-filamen-taires.

11. Etoffe sans ondulations conforme à l'une ou plusieurs des revendications 1 à 10, **caractérisée en ce que** les filés de renfort multi-filamentaires sont des filés de fibres de carbone, des filés de fibres de verre ou des filés d'aramide, ou des filés de polyéthylène de masse moléculaire ultra-haute fortement étirés.

12. Etoffe sans ondulations conforme à l'une ou plusieurs des revendications 1 à 11, **caractérisé en ce que** les filés de renfort des couches disposées les unes au-dessus des autres, vus dans la direction perpendiculaire au plan des couches, forment un angle les uns avec les autres.

13. Etoffe sans ondulations conforme à l'une ou plusieurs des revendications 1 à 12, **caractérisée en ce que** les couches de filés de renfort multi-fila-mentaires et la ou les couche(s) de non-tissé, au nombre d'au moins une, sont attachées les unes à l'autre ou aux autres par des fils de cou-ture disposés parallèlement les uns aux autres, mais espacés les uns des autres.

14. Etoffe sans ondulations conforme à la revendication 13, **caractérisée en ce que** les filés de renfort sont attachés les uns aux autres et fixés les uns contre les autres, à l'intérieur d'une même couche ainsi qu'entre des couches voisines, par des fils de couture espacés les uns des autres d'une certaine largeur de point w, lesquels fils de couture forment des mailles d'une certaine longueur de point s et définissent la direction de référence à 0° de l'étoffe sans ondulations, les filés de renfort des couches sont dis-posés symétriquement par rapport à cette direction de référence à 0° de l'étoffe sans ondulations et, concernant leur direction d'étirage, forment avec la direc-tion de référence à 0° un angle α qui est différent de 90° et différent de 0°, le titre des fils de couture vaut de 10 à 35 dtex, et la longueur de point s des fils de couture, en fonction de la largeur de point et de l'angle $\alpha_1$ des filés de renfort, satisfait les relations (I) et (II) :

$$2 \text{ mm} \leq s \leq 4 \text{ mm} \qquad (I)$$

$$s = n.B.(w.\lvert \tan \alpha_1 \rvert /2,3) \qquad (II)$$

dans lesquelles
w représente la largeur de point, en mm,
la valeur de B est telle que $0,9 \leq B \leq 1,1$,
et n vaut 0,5, 1, 1,5, 2, 3 ou 4,
et l'angle $\alpha_1$ est l'angle suivant lequel sont disposés, par rapport à la direction de référence à 0°, les filés de renfort de la première couche, quand on regarde l'étoffe multiaxiale sans ondulations en vue de dessus, dont les filés de renfort font, par rapport à la direction de référence à 0°, un angle différent de 90° et de 0°.

15. Préforme pour la fabrication de pièces en matériau composite, **caractérisée en ce qu'**elle comprend une étoffe sans ondulations conforme à l'une ou plusieurs des revendications 1 à 14.

**EP 2 547 510 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10252671 C1
- DE 19913647 B4
- WO 9810128 A
- EP 0361796 A1
- EP 1352118 A1
- EP 1057605 A
- US 20050164578 A
- WO 0216481 A
- DE 19809264 A1
- DE 3535272 C2
- US 20070202762 A
- EP 1473132 A
- EP 1772258 A
- US 20080289743 A1
- EP 1705269 A
- US 20060252334 A
- EP 0193479 B1
- EP 0672776 A
- DE 19925588
- US 6890476 B